# EUROPEAN PATENT SPECIFICATION

(11) **EP 0 336 707 B1**
(45) Date of publication and mention of the grant of the patent: **12.07.1995**
(21) Application number: 89303311.8
(22) Date of filing: 04.04.1989
(51) Int. Cl.: H01H 35/38, H01H 36/00, B01D 35/14, H01H 35/28

(54) **Pressure indicator**
Druckanzeiger
Indicateur de pression

(30) Priority: 05.04.1988 US 177710
(43) Date of publication of application: 11.10.1989
(73) Proprietor: PARKER HANNIFIN CORPORATION, Cleveland Ohio 44112 (US)
(72) Inventor: Shane, Bruce E., Metamora Ohio 43540 (US); Leady, Keith D., Morenci Michigan 49256 (US); Conner, Wayne L., Perrysburg Ohio 43551 (US); Cella, Albert F., Sylvania Ohio 43560 (US)
(74) Representative: Purvis, William Michael Cameron

(56) References cited:
- FR-A- 1 329 947
- GB-A- 2 092 752
- US-A- 3 364 897
- US-A- 3 611 220

## Description

The invention relates to a pressure indicator and has particular though not exclusive application to hydraulic fluid filters.

Magnetically operated pop up type magnetic pressure indicators in many different forms have been used for sensing a differential fluid pressure of a particular value in a fluid system and for providing a visual indication of this condition. Many of these devices are of simple construction suited for application in existing filter structures.

One example of a prior art device is shown in Patent specification US-A-2942572 wherein magnet elements are housed in a piston responsive to fluid pressure and in an indicator mechanism magnetically coupled to the piston. This prior art showing is typical of many of these devices in that the magnets are oriented in a common direction so that an attraction therebetween takes place, typically to retain the indicator in a recessed position. As differential fluid pressure increases due to clogging of a filter element, the piston is moved downwardly against the bias of a coil spring and allows the indicator to be released and to be moved to a visible position by means of the bias exerted by a second coil spring. In this apparatus a bimetal strip is employed to prevent movement of the indicator at low temperature levels when, due to the high viscosity of the fluid, transient excessive differential fluid pressures might be realized.

A similar form of device is shown in specification US-A-3442248 wherein a simple button structure is housed in a threaded body member suited for placement in a typical fluid filter. In this apparatus the indicator button is retained in a retracted position by the force of a fixed permanent magnet in the body which resists the bias of a coil spring urging the indicator button outwardly. The piston is formed also of magnetically attractable material and when it is moved to a position adjacent the magnet due to an increase in fluid pressure acting thereon, the piston will draw off sufficient magnetic flux such that the button spring will overcome the magnetic holding force and cause the indicator to pop outwardly of the body. Also in this apparatus a thermal assembly, comprising a bimetal strip, is employed to prevent movement of the indicator button at low temperature levels.

Another similar form of indicator is shown in specification US-A-3595200 where again a fixed permanent magnet is employed to retain an indicator button in the retracted position against the bias of a coil spring. Several techniques are shown for moving a piston or similar structure adjacent the permanent magnet to draw off part of the magnetic flux and allow the indicator button to be released in a manner similar to that previously described.

A still further form of differential pressure indicator is shown in Patent specification US-A-4029042 where a pair of magnets are used, one being fixedly attached at the top of a housing and a second affixed to the lower portion of an indicator button. The magnets are arranged in a common direction to provide attractive force therebetween. However, the indicator button is retained in the lower portion of its housing against an inner wall therein, being attracted by a piston formed of magnetic material. As the piston is moved downwardly due to an increase in fluid pressure, the lower magnet will lose its keeper mechanism and will be attracted by the fixed upper magnet to move the indicator to an exposed position. This apparatus also employs a bimetallic element which contracts or expands at different temperature levels to allow or prevent movement of the indicator button.

In many of the prior art devices, means such as the bimetal strip are often employed to prevent false indications of the pop up type indicator. These false indications are due not only to high viscosity fluid conditions but are often occasioned by vibratory conditions or the like where shock forces can cause the indicator to be released from its latching mechanism. Those prior art devices which are activated by coil springs or which rely on magnetic attractive forces are particularly susceptible to these vibration problems inasmuch as once released from a stable position an automatic movement to the extended visual position occurs. Typically, in these devices the stable position is somewhat sensitive in that a close balance must be achieved between operating spring forces and magnetic attraction forces.

Patent specification US-A-3364897 shows a piston movable in a bore and mounting a magnet which, when the piston moves to a blind end of the bore, repels a further magnet mounted in a further bore beyond the blind end to cause that further magnet to move away from a disc, to which it had been magnetically held, and against the force of a spring to a position in which it gives an indication of over pressure.

According to the invention there is provided a pressure indicator comprising
a body member having a central stop bore,
a piston slidable in the bore,
a spring biasing the piston toward an open end of the bore, the piston being responsive to fluid pressure to move against the bias of the spring towards a closed end of the bore,
a magnet supported on the piston for movement therewith,
a housing on the body member,
an indicator member in the housing slidable between a position recessed in the housing and an extended visible position,
a magnet carried by the indicator member, the indicator magnet being external of the body member and adjacent the closed end of the bore when the indicator member is recessed in the housing, the indicator magnet being repelled by the piston magnet to move the indicator member to the extended position, and
retaining means for holding the indicator member in the recessed position until the indicator magnet is subjected to sufficient repelling force of the piston magnet;
characterised in that the retaining means comprises a detent comprising a cooperating ledge and flange provided one on the housing and the other on the indicator member and a detent spring to bias the indicator member to urge the flange into engagement against the ledge.

Such a pressure indicator can be less susceptible to vibratory influences as well as low temperature induced transient conditions which might falsely activate the indicator device. A minimum of components can be required to achieve an effective construction with no extremely critical dimensions involved.

Preferably the indicator includes an aluminium body member threaded to be received in fluid filter apparatus and which includes the central bore therein housing the piston which is subject to differential fluid pressures. The piston is preferably formed of plastics material (preferably Tetra Flouro Ethylene (TFE) fluorocarbon polymers or fluorinated ethylene-propylene (FEP) resins, generally sold under the trademark "TEFLON") and may include an integral lip seal at the lower end thereof in an economical, reliable construction. The piston can be biased downwardly in the bore by means of a coil spring and carries a permanent magnet upon an extension at its upper end which therefore moves toward and away from a thin wall section at the end of the central bore. A plastics cover structure can be a snap fit on the body member and can house the indicator button slidable in a bore therein between a retracted hidden position and an extended visible position. The indicator button is preferably a cylindrical member carrying a permanent magnet at the lower end thereof which in the retracted position is disposed closely adjacent the thin end wall portion of the body. In this position the indicator button is cocked laterally by a detent spring of the leaf spring type so that a flange at the lower end of the indicator button is forced under a ledge in the sidewall of the cover bore. As differential fluid pressure increases upon the piston to move it upwardly in the body bore, the oppositely poled permanent magnets will create a large repulsion force urging the indicator button initially to an aligned position in the cover bore against the bias of the leaf spring thereby releasing the flange from the shoulder in the bore. Thereafter, the indicator button is moved upwardly to a fully extended position primarily by the repulsion action of the permanent magnets. The indicator button is retained in the upper position by the magnetic force or, if the piston is moved downwardly upon dissipation of the differential fluid pressure, by abutment with the leaf spring which has moved into the path of travel thereof. The indicator may be reset by manually depressing the indicator button against the bias of the leaf spring to a position where the flange is secured beneath the ledge in the cover bore. A bimetal strip is provided to prevent movement of the leaf spring and release of the indicator button at low temperature levels, even if the piston magnet is located closely adjacent the thin wall section of the body.

The invention is diagrammatically illustrated by way of example in the accompanying drawings, in which:-
Figure 1 is a sectional elevational view of a pressure indicator according to the invention with an indicator button in a recessed position;
Figure 2 is a sectional elevational view of a pressure indicator according to the invention showing the indicator button in a visible position;
Figure 3 is an enlarged bottom view of a cover portion only of the pressure indicator of Figures 1 and 2 with the indicator button in the recessed position;
Figure 4 is an enlarged sectional view of the cover portion only taken on line 4-4 of Figure 3; and

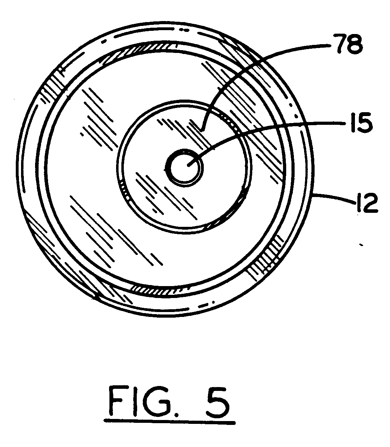

Figure 5 is a plan view of the cover portion only taken on line 5-5 of Figure 1.

Referring to the drawings, a pressure indicator 10 comprises a body member 11, a cover or housing 12, and an indicator button 15. The body member 11 is a cylindrical member having a central stop bore 16 therein terminating in a thin end wall 18 at the top of the body member 11. At the lower end of the vertically disposed stop bore 16 is an enlarged counterbore 19, forming an intermediate shoulder 20. The counterbore 19 extends to the open lower end of the body member 11.

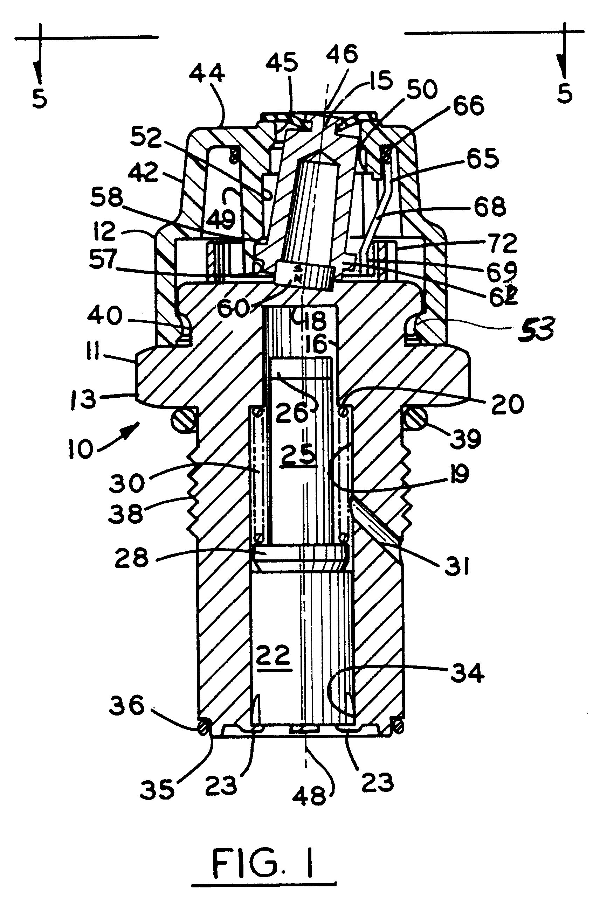

A cylindrical piston 22 is slidably received in the counterbore 19 and is retained therein by a plurality of tabs 23 which are formed by bending over portions of the bottom surface of the body member 11. Located above the piston 22 is a magnet support 25 which is a cylindrical structure capable of a sliding movement upwardly into the bore 16. A permanent magnet 26, formed as a short cylindrical magnet with its north pole face oriented upwardly, is affixed at the upper end of the magnet support 25 for movement therewith toward and away from the end wall 18. The magnet support 25 includes a lower peripheral flange 28 and a conventional coil spring 30 is disposed between the flange 28 and the shoulder 20 to urge the magnet support 25 and the piston 22 downwardly toward the open end of the counterbore 19, to the position indicated in Figure 1.

A duct 31 is provided in the side wall of the body member 11 communicating with the counterbore 19 at a location above the uppermost position of the piston 22 to provide a path for fluid under pressure to the upper face of the piston 22. The piston 22 includes an integral lip seal 34 at the lower portion thereof formed by a peripheral groove in the lower margin of the piston 22. This provides a device for sealing against fluid pressure applied at the open end of the counterbore 19 or at the lower face of the piston 22. Preferably the piston 22 is formed of TEFLON which provides a resilient lip seal 34 and a slippery surface allowing relatively free sliding movement within the counterbore 19. The body member 11 includes a lower circular flange 35 at the bottom face thereof and a circumscribed O-ring 36 for sealing purposes. The body member 11 further includes a plurality of wrench flats 13 at a location intermediate its ends as well as external threads 38 for securing the pressure indicator 10 in a threaded bore of apparatus such as a fluid filter. An O-ring 39 is disposed below the wrench flats 13 to provide a seal with the apparatus. The body member 11 further includes a peripheral groove 40 adjacent its upper end to retain the cover 12 thereon.

The cover 12 which is located at the upper end of the body member 11 is generally of inverted cup configuration having a peripheral sidewall 42 and an upper end wall 44 with an entrance bore 45 formed therein slidably to receive the indicator button 15. As can be seen in Figure 1, the axis 46 of the entrance bore 45 is offset slightly from the axis 48 of the body bore 16 for purposes to be described hereafter. The cover 12 further comprises a generally central depending circular boss 49 through which is formed the entrance bore 45, an adjacent short step bore 50 and a lower, enlarged counterbore 52. An inner peripheral lip 53 is formed at the bottom edge of the cover 12 for engagement in the groove 40 of the body member 11.

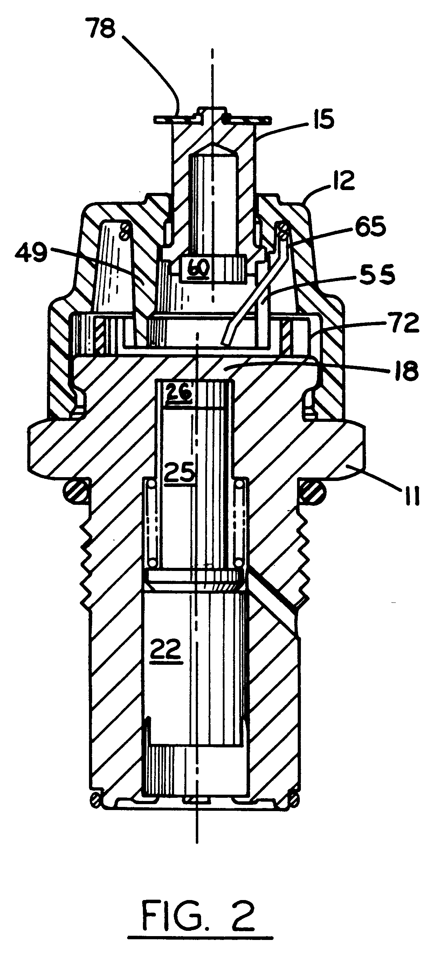

As best seen in Figure 2, the boss 49 includes a vertical opening 55 therein extending the length of the counterbore 52. The opening 55 extends for approximately 60 degrees of angular width and is formed between spaced ends of the boss 49. Near the lower end of the counterbore 52 and opposite the opening 55 is a recess 57 forming a shoulder or ledge 58 in the inner surface of the counterbore 52 which serves as a detent. The recess 57 is a semicircular groove extending approximately 180 degrees in angular extent and blending into the sidewall of the counterbore 52.

The indicator button 15 is a cylindrical member having a central stop bore therein and fixedly supports a permanent magnet 60 in a counterbore at the lower end thereof. The magnet 60 is a small cylindrical magnet, poled magnetically oppositely to the piston magnet 26, that is to say with its north pole facing downwardly so as to be repelled by the piston magnet 26. The indicator button 15 further includes a peripheral flange 62 at the lower portion thereof slightly above the end face, which flange 62 is received in the recess 57 of the counterbore 52 to be located beneath the ledge 58 as depicted in Figure 1. A leaf spring 65 is provided to urge the indicator button into the position shown. The leaf spring 65 is a length of circular section wire formed in a plurality of coils 66 at its upper end and having a depending lower angular section 68 terminating in an end bend 69. The coils 66 of the leaf spring 65 surround the boss 49 to support the spring 65 in the position indicated, with the angular section 68 thereof extending through the opening 55 so that the end bend 69 thereof is in engagement with the peripheral flange 62 of the indicator button 15, urging the indicator button to the tilted position depicted in Figure 1.

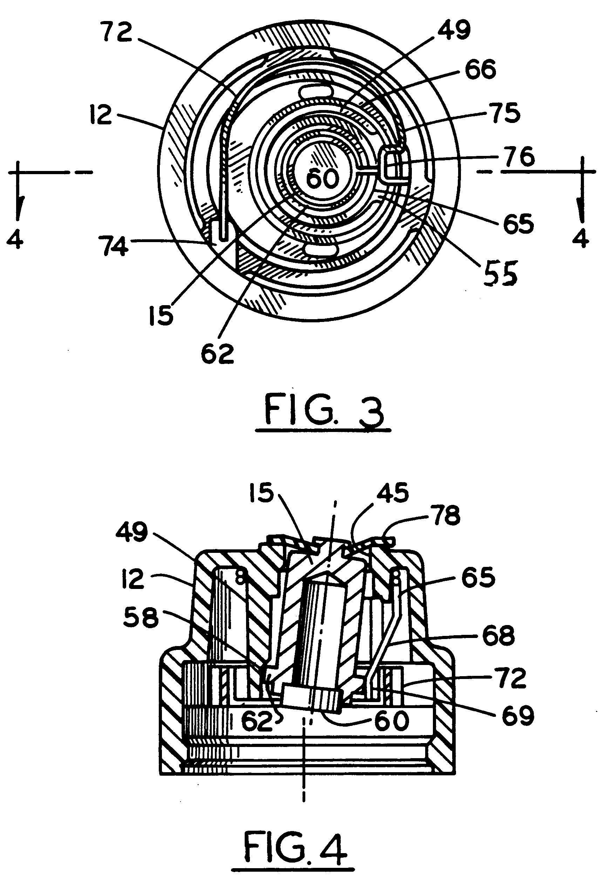

Still further, the differential pressure apparatus 10 comprises a bimetal strip 72 in the form of a semicircle having one end supported in a chordal boss 74 in the inner surface of the cover 12 and its free end 75 formed in an inwardly projected dogleg bend having a tangential flat portion 76 thereon engageable with the leaf spring 65. As best seen in Figures 1, 3 and 4 the bimetal strip 72 may be positioned closely adjacent or in engagement with the leaf spring 65 when in a contracted condition at low temperature levels. In this condition, the bimetal strip 72 will resist outward movement of the leaf spring 65. At higher temperature levels, the bimetal strip will expand to a greater diameter as best indicated in Figure 2, to a position further outwardly of the boss 49 thereby to allow the leaf spring 65 relatively free radial outward movement.

Thus, it will be apparent that the following action of the differential pressure indicator 10 takes place. When in the normal de-actuated condition the piston 22 is at the lower end of the counterbore 19, being urged thereto by the coil spring 30, placing the piston magnet 26 at its lowermost position in the bore 16. The indicator button 15 is in a recessed position within the cover 12 with the flange 62 in engagement with the ledge 58 being urged to and retained in this position by the lateral force applied by the leaf spring 65. In this condition the indicator button 15 will be stable and relatively immune to high levels of disturbing force such as that induced by vibration.

When the differential piston 22 is moved to an upper position as depicted in Figure 2, by the influence of a large differential pressure applied by way of the duct 31 and the open lower end of the counterbore 19, the magnet 26 will be moved into close proximity with or contact with the end wall 18. The body member 11 is preferably formed of nonmagnetic aluminium material and the end wall 18 is relatively thin so that the magnet 26 and the indicator magnet 60 will be positioned closely adjacent one another. The upward repelling force of the piston magnet 26 will urge the indicator magnet 60 upwardly toward the entrance bore 45. Since the indicator button 15 is restrained by the ledge 58, it is initially only capable of angular movement against the bias of the spring 65. The magnetic repelling force thus will urge the indicator button away from its tilted position toward a position more aligned with the axis 48 of the body bore 16 and the entrance bore 45, thereby forcing the leaf spring 65 laterally outwardly of the opening 55 in the boss 49. Preferably the ledge 58 and the upper rim of the flange 62 are slightly bevelled to facilitate such movement. Once the flange 62 is released from the ledge 58 further magnetic repelling force from the piston magnet 26 will urge the indicator button rapidly upwardly and out of the entrance bore 45 to the extended position depicted in Figure 2. During this movement the indicator button 15 will be aided by engagement with the angled section 68 of the leaf spring 65 which will tend to move back inwardly within the boss 49 to the position indicated in Figure 2. While the indicator button 15 may be retained in its uppermost position under the repelling influence of the piston magnet 26 as depicted in Figure 2, once the piston 22 has been returned to a lowered position due to loss of fluid pressure on the lower face thereof, the indicator button 15 will drop down only slightly into engagement with the leaf spring 65 and will be retained substantially in the position indicated. It will be apparent then that the indicator button 15 may be returned to its stable position by manually depressing it against the bias of the leaf spring 65 which in turn will urge the flange 62 beneath the ledge 58 and the indicator button to the tilted position of Figure 1. Preferably, the indicator button includes an elastomeric disc 78 at the top portion thereof which serves as a dust seal for the cover 12 when the indicator button 15 is in its retracted position.

## Claims

1. A pressure indicator comprising
a body member (11) having a central stop bore (16),
a piston (22) slidable in the bore (16),
a spring (30) biasing the piston (22) toward an open end of the bore (16), the piston (22) being responsive to fluid pressure to move against the bias of the spring (30) towards a closed end of the bore (16),
a magnet (26) supported on the piston (22) for movement therewith,
a housing (12) on the body member (11),
an indicator member (15) in the housing (12) slidable between a position recessed in the housing (12) and an extended visible position,
a magnet (60) carried by the indicator member (15), the indicator magnet (60) being external of the body member (11) and adjacent the closed end of the bore (16) when the indicator member (15) is recessed in the housing (12), the indicator magnet (60) being repelled by the piston magnet (26) to move the indicator member (15) to the extended position, and
retaining means for holding the indicator member (15) in the recessed position until the indicator magnet (60) is subjected to sufficient repelling force of the piston magnet (26);
characterised in that the retaining means comprises a detent comprising a cooperating ledge (58) and flange (62) provided one on the housing (12) and the other on the indicator member (15) and a detent spring (65) to bias the indicator member (15) to urge the flange (62) into engagement against the ledge (58).

2. A pressure indicator according to claim 1, wherein the detent spring (65) is a leaf spring engageable with the indicator member (15) in the recessed position and in the extended position to urge the indicator member (15) to the respective position.

3. A pressure indicator according to claim 2, wherein the body member (11) is made of nonmagnetic material and includes a thin wall section (18) at the end of the stop bore (16), against which wall section (18) the indicator member (15) is disposed in the recessed position.

4. A pressure indicator according to any one of claims 1 to 3, further comprising a bimetal strip (72) engageable with the detent spring (65) at low temperature levels and separated therefrom at high temperature levels to prevent and allow release of the indicator member (15) from the detent (58) respectively.

5. A pressure indicator according to claim 1, wherein
the body member (11) is cylindrical, the bore (16) is central therein and a thin wall section (18) closes one end of the bore (16), the other end of the bore (16) being open and to be exposed to fluid under pressure,
a duct (31) in the body member (11) communicates fluid under pressure to the closed end of the bore to establish differential fluid pressure against the piston (22) to move the piston (22) to the closed end of the bore (16),
the housing is a cover (12) secured to the body member (11) over the thin wall section (18), the cover (12) having a bore (45, 50, 52) therein aligned generally parallel to the body member bore (16),
the indicator member is a cylindrical indicator button (15) slidable in the cover bore (45, 50, 52) between a recessed position within the cover (12) and an extended position external of the cover (12),
the flange (62) is on the indicator button (15) on the lower portion thereof,
a recess (57) in the cover bore (45, 50, 52) forms a shoulder ledge (58) engageable by the indicator flange (62) releaseably to retain the indicator button (15), and
the second magnet (60) is operative to release the flange (62) from the shoulder ledge (58) and move the indicator button (15) to the extended position.

6. A pressure indicator according to claim 5, wherein the axis (46) of the cover bore (45) is offset from the axis (48) of the body bore (16) and the indicator button (15) is tilted at an angle with respect to both axes (46, 48) when in the recessed position.

7. A pressure indicator according to claim 6, wherein the second magnet (60) is closely adjacent the thin wall section (18) when the indicator button (15) is in the recessed position.

8. A pressure indicator according to claim 7, wherein the piston (22) is formed of Tetra Flouro Ethylene (TFE) fluorocarbon polymers or fluorinated ethylene-propylene (FEP) resins, generally sold under the trademark "TEFLON" and includes an integral lip seal (34) at the lower portion thereof.

9. A pressure indicator according to claim 8, wherein the body member (11) is externally threaded (38) for engagement in a threaded bore and has wrench flats (13) thereon.

10. A pressure indicator according to claim 9, wherein the body member (11) is formed of aluminium.

11. A pressure indicator according to any one of claims 5 to 10, wherein the spring means (65) is a leaf spring and further comprising a semicircular bimetal strip (72) having a free end (75) adjacent the leaf spring (65) to prevent movement of the leaf spring (65) and release of the indicator button (15) at low temperature levels.

## Patentansprüche

1. Druckanzeiger, welcher folgendes umfaßt:
einen Grundkörper (11) mit einer zentralen Blindbohrung (16);
einen in der Bohrung (16) verschieblichen Kolben (22);
eine Feder (30), die den Kolben (22) in Richtung eines offenen Endes der Bohrung (16) vorspannt, wobei sich der Kolben (22) in Reaktion auf den Fluiddruck gegen die Vorspannung der Feder (30) in Richtung eines geschlossenen Endes der Bohrung (16) bewegt;
einen Magneten (26) auf dem Kolben (22), der von diesem mitgenommen wird;
ein Gehäuse (12) auf dem Grundkörper (11);
ein Anzeigeelement (15) in dem Gehäuse (12), das zwischen einer Position innerhalb des Gehäuses (12) und einer von außen sichtbaren äußeren Position hin- und hergleiten kann;
einen Anzeigemagneten (60) auf dem Anzeigeelement (15), wobei sich der Anzeigemagnet (60) außerhalb des Grundkörpers (11) und am geschlossenen Ende der Bohrung (16) befindet, wenn das Anzeigeelement (15) in das Gehäuse (12) zurückgezogen ist, und wobei der Anzeigemagnet (60) vom Kolbenmagnet (26) abgestoßen wird, um das Anzeigeelement (15) in die äußere Position zu bringen; und
ein Rückhaltemittel zur Halterung des Anzeigeelements (15) in der inneren Position, bis der Anzeigemagnet (60) mit ausreichender Kraft vom Kolbenmagnet (26) abgestoßen wird;
dadurch gekennzeichnet, daß das Rückhaltemittel eine Haltevorrichtung umfaßt, die einen ineinandergreifenden Bund (58) und einen Flansch (62) am Gehäuse (12) bzw. am Anzeigeelement (15) und eine Rastfeder (65) bereitstellt, die das Anzeigeelement (15) vorspannt, um den Flansch (62) in Eingriff mit dem Bund (58) zu bringen.

2. Druckanzeiger nach Anspruch 1, bei dem die Rastfeder (65) eine Blattfeder ist, die in der inneren und in der äußeren Position mit dem Anzeigeelement (15) in Eingriff gebracht werden kann, um das Anzeigeelement (15) in der jeweiligen Position zu halten.

3. Druckanzeiger nach Anspruch 2, bei dem der Grundkörper (11) aus nichtmagnetischem Material besteht und einen dünnwandigen Abschnitt (18) am Ende der Blindbohrung (16) umfaßt, wobei das Anzeigeelement (15) in der inneren Position auf diesem Wandabschnitt (18) aufsitzt.

4. Druckanzeiger nach einem der Ansprüche 1 bis 3, der weiter einen Bimetallstreifen (72) umfaßt, welcher bei niedrigen Temperaturen mit der Rastfeder (65) in Eingriff gebracht werden kann und bei hohen Temperaturen von dieser getrennt wird und so die Freigabe des Anzeigeelements (15) am Bund (58) verhindert bzw. zuläßt.

5. Druckanzeiger nach Anspruch 1, bei dem
der Grundkörper (11) zylindrisch ist, die Bohrung (16) mittig darin angeordnet ist, und ein dünner Wandabschnitt (18) ein Ende der Bohrung (16) abschließt, während das andere Ende der Bohrung (16) offen ist und in Verbindung mit dem unter Druck stehenden Fluid steht,
ein Durchlaß (31) im Grundkörper (11) das unter Druck stehende Fluid mit dem geschlossenen Ende der Bohrung verbindet, um einen Differenzdruck über dem Kolben (22) aufzubauen, um den Kolben (22) zum geschlossenen Ende der Bohrung (16) zu verschieben,
das Gehäuse eine Abdeckung (12) ist, die am Grundkörper (11) über dem dünnen Wandabschnitt (18) befestigt ist, wobei die Abdeckung (12) eine Bohrung (45, 50, 52) aufweist, die im allgemeinen parallel zur Bohrung des Grundkörpers (16) ausgerichtet ist,
das Anzeigeelement ein zylindrischer Anzeigeknopf (15) ist, der in der Bohrung (45, 50, 52) in der Abdeckung zwischen einer inneren Position innerhalb dieser Abdeckung (12) und einer äußeren Position außerhalb der Abdeckung (12) hin- und hergleiten kann,
der Flansch (62) des Anzeigeknopfes (15) sich am unteren Teil desselben befindet,
ein Rücksprung (57) in der Bohrung (45, 50, 52) der Abdekkung eine Schulter bzw. einen Bund (58) bildet, der lösbar mit dem Flansch (62) des Anzeigeknopfs (15) in Eingriff steht, um den Anzeigeknopf zurückzuhalten, und
der zweite Magnet (60) derart wirkt, daß der Flansch (62) vom Bund (58) freigegeben und der Anzeigeknopf (15) in die äußere Position gebracht wird.

6. Druckanzeiger nach Anspruch 5, bei dem die Achse (46) der Bohrung (45) der Abdeckung gegenüber der Achse (48) der Bohrung (16) im Grundkörper versetzt ist, und der Anzeigeknopf (15) in der inneren Position in einem Winkel gegenüber den beiden Achsen (46, 48) geneigt ist.

7. Druckanzeiger nach Anspruch 6, bei dem der zweite Magnet (60) dicht am dünnen Wandabschnitt (18) anliegt, wenn sich der Anzeigeknopf (15) in der inneren Position befindet.

8. Druckanzeiger nach Anspruch 7, bei dem der Kolben (22) aus Tetrafluorethylen(TFE)-Fluorkohlenwasserstoffpolymeren oder fluorierten Ethylen-Propylen-Harzen (FEP-Harzen), allgemein unter der Markenbezeichnung "TEFLON" im Handel, hergestellt ist und eine integrale Dichtlippe (34) am unteren Teil umfaßt.

9. Druckanzeiger nach Anspruch 8, bei dem der Grundkörper (11) auf der Außenseite mit einem Gewinde (38) ausgeführt ist, das in eine Gewindebohrung eingeschraubt wird, und mit Schlüsselflächen (13) versehen ist.

10. Druckanzeiger nach Anspruch 9, bei dem der Grundkörper (11) aus Aluminium gefertigt ist.

11. Druckanzeiger nach einem der Ansprüche 5 bis 10, bei dem die Federanordnung (65) aus einer Blattfeder besteht, und der weiterhin einen halbkreisförmigen Bimetallstreifen (72) umfaßt, der mit seinem freien Ende (75) auf die Blattfeder (65) wirkt, um eine Bewegung der Blattfeder (65) und die Freigabe des Anzeigeknopfes (15) bei niedrigen Temperaturen zu verhindern.

## Revendications

1. Indicateur de pression comprenant
un élément de corps (11) muni d'un alésage d'arrêt central (16),
- un piston (22) pouvant glisser dans l'alésage (16),
- un ressort (30) poussant le piston (22) vers une extrémité ouverte de l'alésage (16), le piston (22) répondant à une pression de fluide pour se déplacer contre la poussée du ressort (30) vers une extrémité fermée de l'alésage (16),
- un aimant (26) monté sur le piston (22) pour se déplacer solidairement de celui-ci,
- un carter (12) monté sur l'élément de corps (11),
- un élément d'indicateur (15) pouvant glisser dans le carter (12) entre une position en retrait dans ce carter (12) et une position de sortie visible,
- un aimant (60) porté par l'élément d'indicateur (15), cet aimant (60) de l'indicateur étant à l'extérieur de l'élément de corps (11) et au voisinage de l'extrémité fermée de l'alésage (16) lorsque l'élément d'indicateur (15) est en retrait dans le carter (12), l'aimant (60) de l'indicateur étant repoussé par l'aimant (26) du piston de manière à entraîner l'élément d'indicateur (15) vers la position de sortie, et
- des moyens de retenue pour maintenir l'élément d'indicateur (15) dans la position en retrait jusqu'à ce que l'aimant (60) de l'indicateur soit soumis à une force de répulsion suffisante de la part de l'aimant (26) du piston ;
caractérisé en ce que les moyens de retenue comprennent une détente comportant un rebord (58) et une collerette (62) en coopération, dont l'un est formé sur le carter (12) tandis que l'autre est formée sur l'élément d'indicateur (15), et un ressort de détente (65) destiné à pousser l'élément d'indicateur (15) pour pousser la collerette (62) en contact contre le rebord (58).

2. Indicateur de pression selon la revendication 1, caractérisé en ce que le ressort de détente (65) est une lame de ressort pouvant venir en prise avec l'élément d'indicateur (15) dans la position en retrait et dans la position de sortie, de manière à pousser cet élément d'indicateur (15) vers la position respective.

3. Indicateur de pression selon la revendication 2, caractérisé en ce que l'élément de corps (11) est réalisé dans un matériau non-magnétique et comprend une partie de paroi mince (18) à l'extrémité de l'alésage d'arrêt (16), partie de paroi mince (18) contre laquelle l'élément d'indicateur (15) est disposé dans la position en retrait.

4. Indicateur de pression selon l'une quelconque des revendications 1 à 3, caractérisé en ce qu'il comprend en outre un bilame (72) pouvant venir en prise avec le ressort de détente (65) aux niveaux de température bas, et séparé de ce ressort aux niveaux de température élevés, de manière à empêcher et permettre respectivement la libération de l'élément d'indicateur (15) par rapport à la détente (58).

5. Indicateur de pression selon la revendication 1, caractérisé en ce que :
- l'élément de corps (11) est cylindrique, l'alésage (16) est placé au centre de celui-ci et une partie de paroi mince (18) ferme une extrémité de l'alésage (16), l'autre extrémité de cet alésage (16) étant ouverte pour être exposée à un fluide sous pression,
- un conduit (31) percé dans l'élément de corps (11) fait communiquer le fluide sous pression avec l'extrémité fermée de l'alésage pour établir une pression de fluide différentielle contre le piston (22) de manière à déplacer ce piston (22) vers l'extrémité fermée de l'alésage (16),
- le carter est un couvercle (12) fixé à l'élément de corps (11) au-dessus de la partie de paroi mince (18), ce couvercle (12) comportant dans celui-ci un alésage (45, 50, 52) généralement aligné parallèlement à l'alésage (16) de l'élément de corps,
- l'élément d'indicateur est un bouton d'indicateur cylindrique (15) pouvant glisser dans l'alésage (45, 50, 52) du couvercle entre une position en retrait à l'intérieur du couvercle (12), et une position de sortie à l'extérieur de ce couvercle (12),
- la collerette (62) est formée sur le bouton d'indicateur (15) sur la partie inférieure de celui-ci,
- une cavité (57) prévue dans l'alésage (45, 50, 52) du couvercle forme un rebord d'épaulement (58) pouvant venir en prise de manière libérable avec la collerette (62) de l'indicateur pour retenir le bouton d'indicateur (15), et
- le second aimant (60) sert à libérer la collerette (62) du rebord d'épaulement (58) et à déplacer le bouton d'indicateur (15) vers la position de sortie.

6. Indicateur de pression selon la revendication 5, caractérisé en ce que l'axe (46) de l'alésage (45) du couvercle est décalé par rapport à l'axe (48) de l'alésage (16) du corps, et en ce que le bouton d'indicateur (15) est basculé d'un certain angle par rapport aux deux axes (46, 48) lorsqu'il est dans sa position en retrait.

7. Indicateur de pression selon la revendication 6, caractérisé en ce que le second aimant (60) est tout contre la partie de paroi mince (18) lorsque le bouton d'indicateur (15) est dans sa position en retrait.

8. Indicateur de pression selon la revendication 7, caractérisé en ce que le piston (22) est réalisé en tétrafluoréthylène (TFE), en polymères de fluorocarbone, ou en résines d'éthylène-propylène fluorées (FEP), généralement vendus sous la marque de fabrique "TEFLON", et comprend une lèvre de joint d'étanchéité d'un seul tenant (34) à sa partie inférieure.

9. Indicateur de pression selon la revendication 8, caractérisé en ce que l'élément de corps (11) est fileté extérieurement en (38) pour se visser dans un alésage taraudé, et comporte sur celui-ci des méplats (13) destinés à recevoir une clef.

10. Indicateur de pression selon la revendication 9, caractérisé en ce que l'élément de corps (11) est réalisé en aluminium.

11. Indicateur de pression selon l'une quelconque des revendications 5 à 10, caractérisé en ce que les moyens de ressort (65) consistent en une lame de ressort, et en ce qu'il comprend en outre un bilame semi-circulaire (72) comportant une extrémité libre (75) au voisinage de la lame de ressort (65) pour empêcher le mouvement de la lame de ressort (65) et libérer le bouton d'indicateur (15) aux niveaux de température bas.
